# FASCICULE DE BREVET EUROPEEN

(11) **EP 1 247 134 B1**
(45) Date de publication et mention de la délivrance du brevet: **10.12.2003**
(21) Numéro de dépôt: 01903882.7
(22) Date de dépôt: 04.01.2001
(51) Int. Cl.: G02B 27/30, G02B 27/09, G02B 17/00

(54) **DISPOSITIF OPTIQUE MONOLITHIQUE DE TRANSMISSION DE LUMIERE, ET BLOC OPTIQUE A VOIES MULTIPLE UTILISANT UN TEL DISPOSITIF**
EINSTÜCKIGES OPTISCHES ELEMENT ZUR LICHTTRANSMISSION UND MEHRKANALIGER OPTISCHER MODUL MIT DIESEN ELEMENTEN
MONOLITHIC OPTICAL DEVICE FOR LIGHT TRANSMISSION, AND MULTICHANNEL OPTICAL SYSTEM USING SAME

(30) Priorité: 07.01.2000 FR 0000201
(43) Date de publication de la demande: 09.10.2002
(73) Titulaire: Honeywell S.A., 91190 Saint-Aubin (FR)
(72) Inventeur: LENOIRE, Didier, F-38660 Lumbin (FR); GODFROY, Dominique, F-38100 Grenoble (FR); GIERCZAK, Marek, F-38240 Meylan (FR)
(74) Mandataire: Hecke, G.
(86) Numéro de dépôt international: FR0100039
(87) Numéro de publication internationale: WO01050181

(56) Documents cités:
- EP-A- 0 534 853
- WO-A-89/05463
- WO-A-98/53348
- US-A- 4 627 692
- US-A- 5 225 931

## Description

### Domaine technique de l'invention

L'invention est relative à un dispositif optique de transmission de lumière comprenant un élément condenseur muni d'une première lentille pour concentrer la lumière dans l'ouverture d'une deuxième lentille d'un objectif destiné à émettre ou à recevoir un faisceau optique.

### Etat de la technique

Les dispositifs optiques de transmission de lumière utilisent généralement un système de lentilles et de diaphragmes répartis dans une chambre optique. Il est impératif de prévoir un support mécanique destiné à positionner avec précision les différents organes les uns par rapport aux autres. Les barrières optoélectroniques possèdent généralement deux cent faisceaux lumineux de surveillance, nécessitant côté émetteur et côté récepteur un total de quatre cent dispositifs optiques de transmission de lumière. Le nombre important de supports mécaniques augmente le coût de revient de l'installation.

### Objet de l'invention

Un premier objet de l'invention consiste à réaliser en une seule pièce unique un dispositif optique de transmission de lumière capable d'éliminer tout rayonnement lumineux parasite ne se trouvant pas dans le faisceau lumineux primaire d'émission ou de réception traversant l'objectif. On entend par faisceau lumineux primaire l'ensemble des rayons lumineux passant directement d'une lentille à l'autre. Tout rayon lumineux empruntant un chemin non direct est défini comme étant un rayon parasite.

Le dispositif selon l'invention est caractérisé en ce que :
- la première lentille de l'élément condenseur et la deuxième lentille de l'objectif sont agencées respectivement à une première extrémité, et à une deuxième extrémité opposée d'un module à optique intégrée réalisée en un matériau transparent ayant un indice de réfraction prédéterminé,
- la zone intermédiaire dudit module à optique intégrée comporte une pluralité de déviateurs formés par une succession de surfaces dioptriques échelonnées le long de la direction de propagation du flux lumineux entre la première lentille et la deuxième lentille, de manière à assurer une déviation en dehors du module optique des rayons parasites réfléchis à l'intérieur du module optique, et ainsi inhiber la transmission desdits rayons parasites, soit à travers la deuxième lentille de l'objectif s'il s'agit d'une émission lumineuse venant de l'élément condenseur, soit à travers la première lentille s'il s'agit d'une réception lumineuse venant de la deuxième lentille.

La structure monobloc du dispositif optique de transmission de lumière évite l'usage d'une chambre optique munie de pièces mécaniques de support et de positionnement. Il en résulte une diminution du coût global du dispositif optique de transmission de lumière.

Selon un mode de réalisation préférentiel, un diaphragme peut être associé à la première extrémité du module à optique intégrée, et comporter un orifice calibré pour déterminer l'ouverture angulaire du faisceau optique utile émis ou reçu par l'objectif.
En l'absence de diaphragme, c'est la dimension de la première lentille qui détermine l'ouverture angulaire du faisceau optique émis ou reçu par l'objectif.

La deuxième lentille de l'objectif présente une distance focale prédéterminée dont le foyer est confondu avantageusement avec le plan du diaphragme.
En l'absence de diaphragme, la deuxième lentille constituant l'objectif présente une distance focale prédéterminée dont le foyer est confondu avec le plan d'ouverture de la première lentille constituant le condenseur.
La forme et le positionnement des surfaces dioptriques des déviateurs sont choisis pour assurer l'éjection latérale par réfraction des rayons parasites réfléchis dans le module à optique intégrée.

Selon une caractéristique de l'invention, le matériau du module à optique intégrée possède une qualité de transparence dans la bande passante de 360 nm à 1560 nm.

Selon une autre caractéristique de l'invention, les surfaces dioptriques sont alternativement convergentes et divergentes en étant rattachées les unes aux autres par des cols coaxiaux présentant des diamètres croissants er; direction de l'objectif, de manière à définir avec le diaphragme un cône optique primaire à l'intérieur du module.

Un deuxième objet de l'invention consiste à réaliser un bloc optique à voies multiple utilisant une pluralité de modules à optique intégrée, en évitant toute interférence lumineuse entre les différentes voies.

Un organe optoélectronique est placé dans chaque voie devant la première lentille de l'élément condenseur correspondant, et est constitué soit par une diode électroluminescente en mode émetteur, soit par une photodiode dans le mode récepteur. Les différents modules optiques sont intégrés parallèlement à intervalles réguliers au sein d'une plaque support, laquelle est équipée de pièces de fixation saillantes pour l'encliquetage sur un circuit électronique logé à l'intérieur d'un profilé creux allongé. Les différents modules d'un bloc optique sont rattachés entrè eux, à l'opposé de la plaque, par des ponts de liaison rigides dont les faces frontales sont taillées selon des prismes, et comprenant de plus des languettes élastiques pour servir d'organes de pression lors du maintien mécanique à l'intérieur du profilé. La deuxième lentille de chaque objectif des modules optiques est logée dans une ouverture du profilé de manière à pouvoir émettre ou recevoir le faisceau lumineux.

Un tel bloc optique à voies multiple peut être utilisé pour la construction de barrages optoélectroniques équipés pour la protection des travailleurs opérant sur des machines dangereuses.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
- la figure 1 est vue en perspective d'un dispositif optique de transmission de lumière selon l'invention;
- la figure 2 illustre la trajectoire des rayons dans le dispositif optique de transmission selon la figure 1;
- la figure 3 représente une vue en coupe axiale du dispositif optique de la figure 1;
- la figure 4 est une vue en perspective d'un bloc optique à voies multiple, composées de plusieurs modules optiques selon l'invention;
- la figure 5 représente une vue en coupe axiale du bloc optique de la figure 4;
- la figure 6 est une vue en coupe selon la ligne 6-6 de la figure 5;
- la figure 7 montre une vue de dessous du bloc optique de la figure 4;
- la figure 8 représente le bloc optique intégré dans un profilé en aluminium pour constituer une barrière optoélectronique;
- la figure 9 montre une vue en perspective de la barrière optoélectronique équipée d'un assemblage modulaire de plusieurs blocs optiques selon l'invention.

### Description d'un mode de réalisation préférentiel

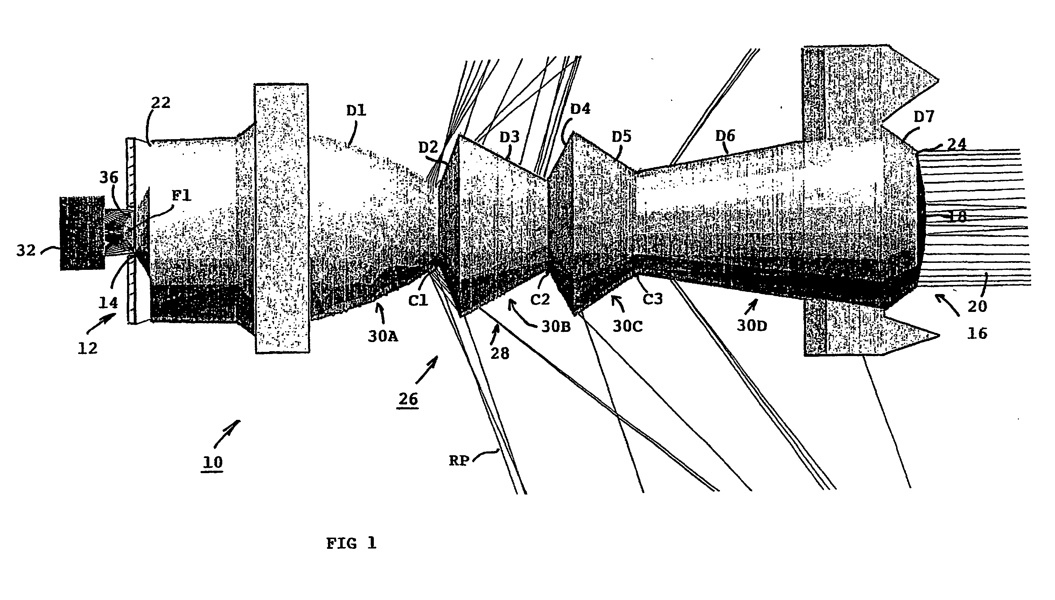

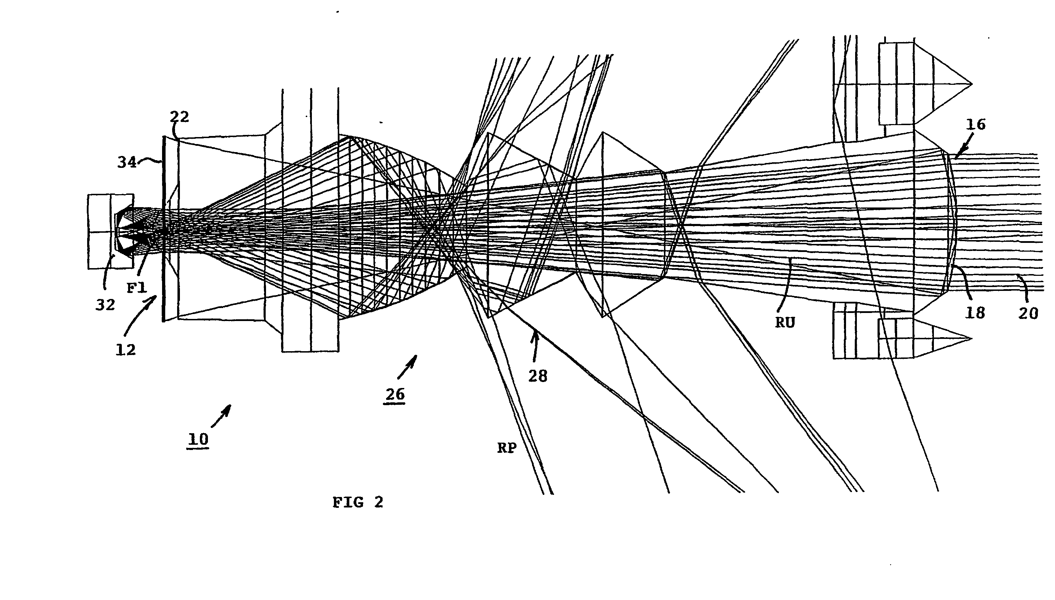

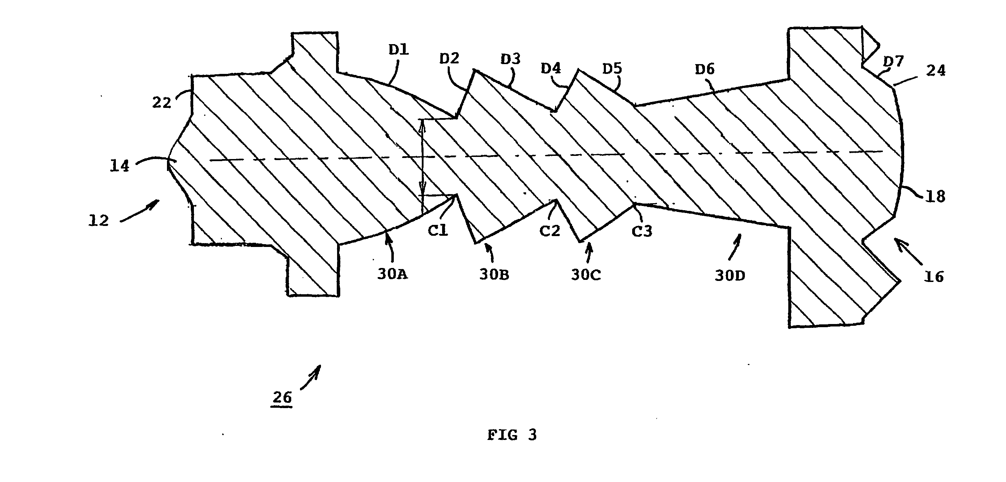

En référence aux figures 1 à 3, un dispositif optique 10 de transmission de lumière comprenant un élément condenseur 12 constitué par une première lentille 14 pour concentrer la lumière dans l'ouverture d'un objectif 16 doté d'une deuxième lentille 18 destinée à émettre ou à recevoir un faisceau optique 20.

La première lentille 14 de l'élément condenseur 12 et la deuxième lentille 18 de l'objectif 16 sont agencées respectivement à une première extrémité 22, et à une deuxième extrémité 24 opposée d'un module à optique intégrée 26 réalisée par une entité monobloc rectiligne en un matériau transparent, ayant un indice de réfraction prédéterminé, et une qualité de transparence dans la bande passante de 360 nm à 1560 nm, c'est à dire dans le visible et dans l'infrarouge.

La zone intermédiaire 28 du module à optique intégrée 26 comporte une pluralité de déviateurs 30A, 30B, 30C, 30D, formés par une succession de surfaces dioptriques D1 à D7 échelonnées symétriquement le long de la direction longitudinale de propagation interne du flux lumineux entre la première lentille 14 et la deuxième lentille 18. Le rôle des surfaces dioptriques D1 à D7 consiste à assurer une déviation des rayons parasites réfléchis à l'intérieur du module optique 26, en inhibant la transmission de ces rayons parasites, soit à travers la deuxième lentille 18 de l'objectif 16 lors d'une émission lumineuse venant de l'élément condenseur 12, soit à travers la première lentille 14 lors d'une réception lumineuse venant de la deuxième lentille 18.

Un organe optoélectronique 32 est placé devant la première lentille 14 de l'élément condenseur 12 avec interposition d'un diaphragme 34 muni d'un orifice 36 circulaire calibré en fonction de l'ouverture angulaire de la deuxième lentille 18 qui détermine la dimension diamétrale du faisceau optique 20 utile émis ou reçu par l'objectif 16. L'organe optoélectronique 32 peut être un moyen émetteur ou un moyen récepteur de lumière.

La deuxième lentille 18 de l'objectif 16 présente une distance focale prédéterminée, dont le foyer F1 est avantageusement confondu avec le plan du diaphragme 34.

Dans le cas d'un dispositif émetteur, l'organe optoélectronique 32 est constitué par une diode électroluminescente LED ou tout autre source de lumière, coopérant avec l'élément condenseur 12 pour concentrer les rayons lumineux utiles RU dans un faisceau primaire conique dirigé sur la surface de la deuxième lentille 18 après avoir traversé longitudinalement le matériau transparent du module 26. La forme, le nombre et le positionnement des surfaces dioptriques D1 à D7 des déviateurs 30A, 30B, 30C, 30D sont choisis pour assurer l'éjection latérale par réfraction des rayons parasites RP réfléchis dans le module à optique intégrée 26. L'éjection par réfraction des rayons parasites RP peut intervenir après au moins une réflexion interne sur l'une des surfaces dioptriques D1 à D7 en fonction de la valeur de l'angle d'incidence.

La surface dioptrique D1 du premier déviateur 30A présente une forme courbe, notamment de spirale logarithmique, permettant la réflexion totale de la majorité des rayons parasite se trouvant en dehors du cône optique des rayons utiles RU. Toutes les autres surfaces dioptriques de déviation sont de formes tronconiques, soit divergentes pour les surfaces D2, D4, D6, soit convergentes pour les surfaces D3, D5, D7 dans le sens de propagation du faisceau primaire vers l'objectif 16 lorsqu'on se trouve en mode émetteur.

La surface dioptrique D1 est rattachée à la surface dioptrique D2 du deuxième déviateur 30B par un premier col C1 ayant un diamètre de l'ordre de 3,5mm. La surface dioptrique D3 est reliée à la surface dioptrique D4 du troisième déviateur 30C par un deuxième col C2 ayant un diamètre de l'ordre de 4mm. La surface dioptrique D5 est rattachée à la surface dioptrique D6 du quatrième déviateur 30D par un troisième col C3 doté d'un diamètre de 4,5mm. La dernière surface dioptrique D7 délimite à l'extrémité 24 le pourtour de la deuxième lentille 18 de l'objectif 16 dont le diamètre est de 6mm.

La variation croissante des diamètres des trois cols C1, C2, C3 coaxiaux des déviateurs 30A à 30D en direction de l'objectif 16 permet de définir avec le diaphragme 34, le cône optique primaire des rayons utiles RU à l'intérieur du module à optique intégrée 26. Tous les autres rayons parasites se trouvant en dehors du cône optique, sont réfléchis sur une ou plusieurs surfaces dioptriques et éjectés latéralement vers l'extérieur après réfraction (voir rayons RP).

Dans le cas d'un dispositif récepteur, l'organe optoélectronique 32 est constitué par une photodiode.

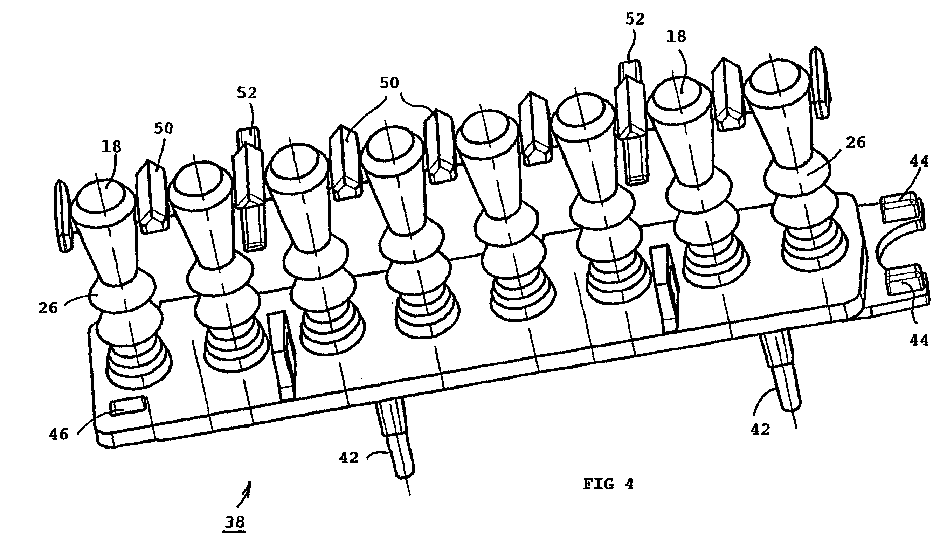

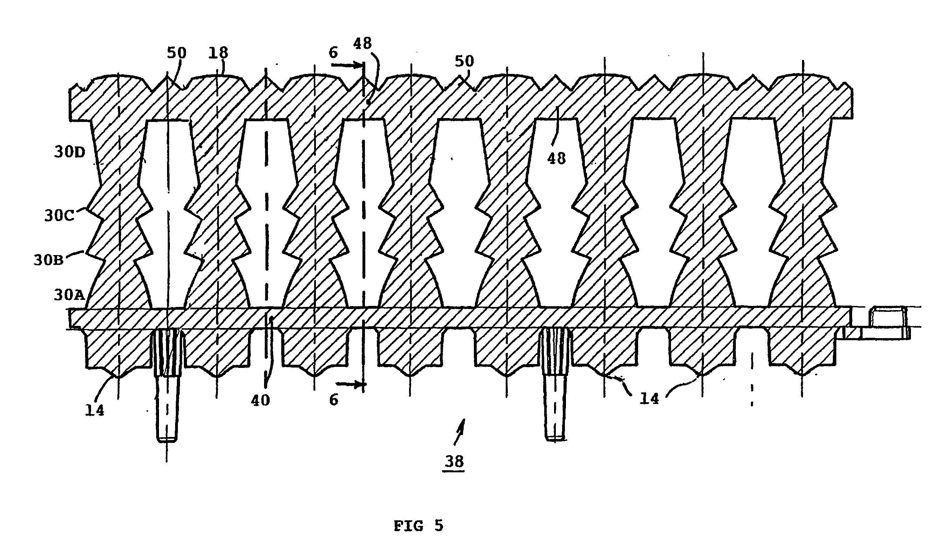

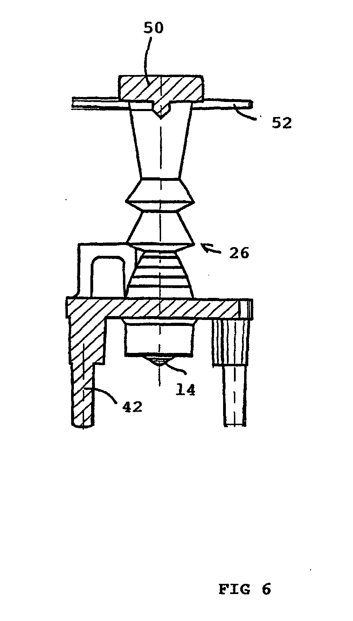

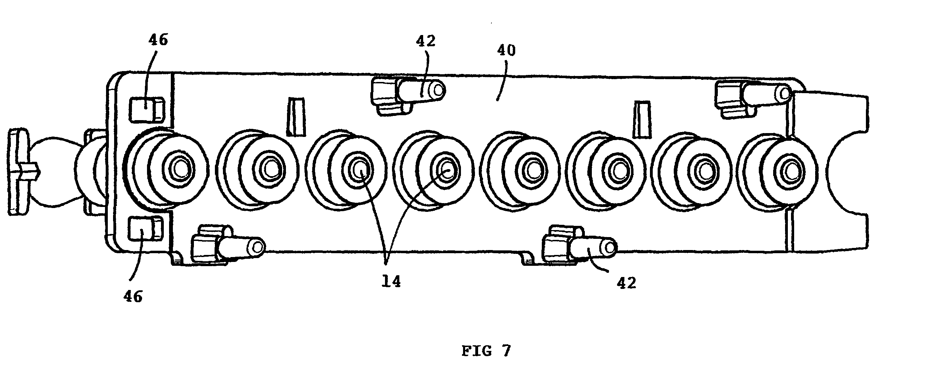

Les figures 4 à 7 représentent un bloc optique 38 à voies multiple, composées de plusieurs modules optiques 26 montés parallèlement à intervalles réguliers sur une plaque support 40 de forme rectangulaire. La plaque support 40 est équipée de pièces de fixation 42 s'étendant perpendiculairement à la surface plane de la plaque 40, et faisant saillie de la première lentille 14 de l'élément condenseur 12. Des plots d'encliquetage et de positionnement 44 sont agencés à l'une des extrémités de la plaque 40, tandis que l'autre extrémité comporte des trous 46 de formes conjuguées à celles des plots 44. La présence des plots 44 et trous 46 permet un assemblage modulaire de plusieurs blocs optiques 38 en fonction du nombre de voies souhaitées.

A l'opposé de la plaque 40, les différents modules 26 d'un bloc optique 38 sont rattachés entre eux par des ponts de liaison 48 rigides dont les faces frontales sont taillées selon des prismes 50. Des languettes 52 élastiques font également partie intégrante des ponts de liaison 48 pour servir d'organes de pression lors du maintien mécanique dans un équipement.

Les différents modules 26 d'un bloc optique 38 sont réalisés par injection plastique ou par tout autre procédé de formage, notamment par pression. La matière utilisée est un thermoplastique, notamment un polyacrylique transparent comme le polyméthacrylate de méthyle PMMA. Il est clair que d'autres matières transparentes sont possibles, notamment le polycarbonate, le verre, le cristal, etc..

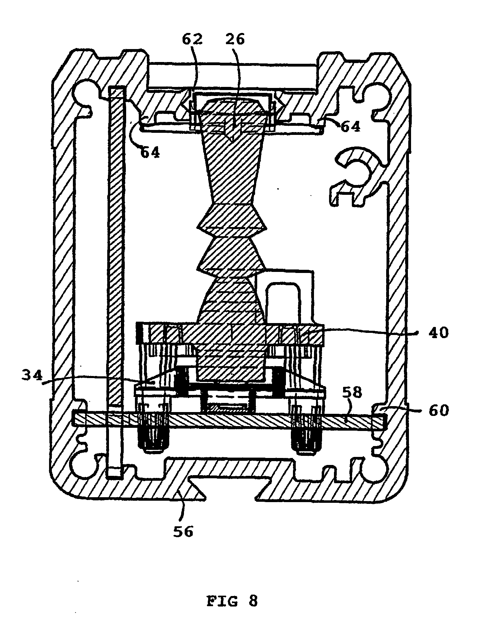

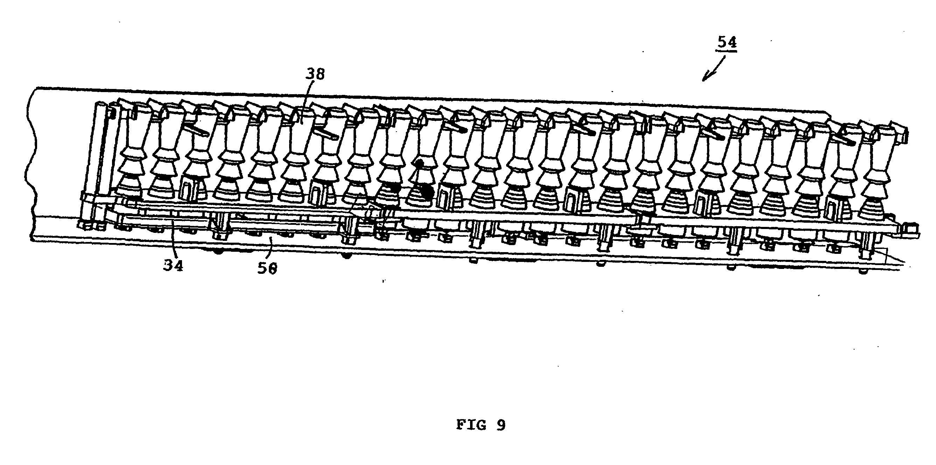

En référence aux figures 8 et 9, le bloc optique 38 est utilisé pour réaliser un équipement de sécurité ou de surveillance, par exemple un barrage optoélectronique pour la protection des travailleurs opérant sur des machines dangereuses. Le barrage optoélectronique 54 comporte un profilé 56 creux en aluminium, dont la longueur est fonction de la zone à surveiller. Un circuit électronique 58 est inséré dans une rainure 60 à l'intérieur du profilé 56, et comporte une multitude de diodes électroluminescentes LED ou de photodiodes selon qu'il s'agit d'une rampe émettrice ou d'une rampe réceptrice. Une plaquette intermédiaire percée recouvre les LED ou les photodiodes, et joue le rôle de diaphragme 34. Le bloc optique 38 est ensuite encliqueté sur le circuit électronique 58 après introduction des pièces de fixation 42 dans des trous de la carte. La deuxième lentille 18 de chaque objectif 16 des modules optiques 26 est logée dans une ouverture 62 du profilé de manière à pouvoir émettre ou recevoir le faisceau lumineux 20 correspondant. Les languettes 52 élastiques font pression sur des bossages 64 internes du profilé 56 pour assurer le maintien mécanique du bloc optique 38 sur le circuit électronique 58. La figure 9 montre l'assemblage de plusieurs blocs optiques 38 s'étendant longitudinalement sur un tronçon rectiligne du barrage optoélectronique 54.

## Revendications

1. Dispositif optique de transmission de lumière comprenant un élément condenseur (12) comprenant une première lentille (14) pour concentrer la lumière dans l'ouverture d'un objectif (16) ayant une deuxième lentille (18) destinée à émettre ou à recevoir un faisceau optique (20),
**caractérisé en ce que** :
- la première lentille (14) de l'élément condenseur (12) et la deuxième lentille (18) de l'objectif (16) sont agencées respectivement à une première extrémité (22), et à une deuxième extrémité (24) opposée d'un module à optique intégrée (26), lequei est réalisée par une entité monobloc rectiligne en matériau transparent ayant un indice de réfraction prédéterminé,
- la zone intermédiaire (28) dudit module à optique intégrée comporte une pluralité de déviateurs (30A, 30B, 30C, 30D) formés par une succession de surfaces dioptriques (D1 à D7) échelonnées le long de la direction de propagation du flux lumineux entre la première lentille (14) et la deuxième. lentille (18), de manière à assurer une déviation en dehors du module optique des rayons parasites réfléchis à l'intérieur du module optique, et ainsi inhiber la transmission desdits rayons parasites, soit à travers la deuxième lentille (18) de l'objectif (16) s'il s'agit d'une émission lumineuse venant de l'élément condenseur (12), soit à travers la première lentille (14) s'il s'agit d'une réception lumineuse venant de la deuxième lentille (18).

2. Dispositif optique de transmission de lumière selon la revendication 1, **caractérisé en ce qu'**un diaphragme (34) est associé à la première extrémité (22) du module à optique intégrée (26), et comporte un orifice (36) calibré en fonction de l'ouverture angulaire du faisceau optique (20) utile émis ou reçu par l'objectif (16).

3. Dispositif optique de transmission de lumière selon la revendication 1, **caractérisé en ce que** la dimension de la première lentille (14) est choisie en fonction de l'ouverture angulaire du faisceau optique émis ou reçu par l'objectif (16).

4. Dispositif optique de transmission de lumière selon la revendication 2, **caractérisé en ce que** la deuxième lentille (18) de l'objectif (16) présente une distance focale prédéterminée dont le foyer (F1) est confondu avec le plan du diaphragme (34).

5. Dispositif optique de transmission de lumière selon la revendication 3, **caractérisé en ce que** la deuxième lentille (18) constituant l'objectif (16) possède un foyer confondu avec le plan d'ouverture de la première lentille (14).

6. Dispositif optique de transmission de lumière selon la revendication 1, **caractérisé en ce que** la forme et le positionnement des surfaces dioptriques (D1 à D7) des déviateurs (30A, 30B, 30C, 30D) sont choisis pour assurer l'éjection latérale par réfraction des rayons parasites réfléchis dans le module à optique intégrée (26).

7. Dispositif optique de transmission de lumière selon la revendication 1, **caractérisé en ce que** le matériau du module à optique intégrée (26) possède une qualité de transparence dans la bande passante de 360 nm à 1560 nm.

8. Dispositif optique de transmission de lumière selon la revendication 6, **caractérisé en ce que** les surfaces dioptriques (D1 à D7) sont alternativement convergentes et divergentes en étant rattachées les unes aux autres par des cols (C1, C2, C3) coaxiaux présentant des diamètres croissants en direction de l'objectif (16), de manière à définir avec le diaphragme (34) un cône optique primaire à l'intérieur du module (26).

9. Bloc optique à voies multiple utilisant dans chaque voie un module à optique intégrée (26) selon l'une des revendications 1 à 8.

10. Bloc optique à voies multiple selon la revendication 9, **caractérisé en ce qu'**un organe optoélectronique (32) est placé dans chaque voie devant la première lentille (14) de l'élément condenseur (12) correspondant, et est constitué soit par un organe émetteur, notamment une diode électroluminescente LED ou une diode laser, soit par un organe récepteur, notamment une photodiode.

11. Bloc optique à voies multiple selon la revendication 9 ou 10, **caractérisé en ce que** les différents modules optiques (26) sont intégrés parallèlement à intervalles réguliers au sein d'une plaque support (40) équipée de pièces de fixation (42) saillantes pour l'encliquetage sur un circuit électronique (58) logé à l'intérieur d'un profilé (56) creux allongé.

12. Bloc optique à voies multiple selon la revendication 9 ou 10, **caractérisé en ce que** :
- les différents modules (26) d'un bloc optique (38) sont rattachés entre eux, à l'opposé de la plaque (40), par des ponts de liaison (48) rigides comprenant des languettes (52) élastiques pour servir d'organes de pression lors du maintien mécanique à l'intérieur du profilé (56),
- la deuxième lentille (18) de chaque objectif (16) des modules optiques (26) est logée dans une ouverture (62) du profilé de manière à pouvoir émettre ou recevoir le faisceau lumineux (20).

13. Bloc optique à voies multiple selon la revendication 12, **caractérisé en ce que** les ponts de liaison (48) ont des faces frontales taillées selon des prismes (50) pour dévier des faisceaux parasites en dehors du cône primaire de lumière.

## Patentansprüche

1. Optische Vorrichtung zur Lichtübertragung mit einem Kondensorelement (12), das eine erste Linse (14) zum Bündeln des Lichts in der Öffnung eines Objektivs (16) umfasst, das eine zweite Linse (18) umfasst, die vorgesehen ist, einen optischen Strahl (20) auszusenden oder zu empfangen,
**dadurch gekennzeichnet, dass**:
- die erste Linse (14) des Kondensorelements (12) und die zweite Linse (18) des Objektivs (16) jeweils an einem ersten Ende (22) bzw. einem zweiten, entgegengesetzten Ende (24) eines Moduls mit integrierter Optik (26) angeordnet sind, das in Form einer geraden, einstückigen Einheit aus transparentem Material mit einem vorbestimmten Brechungskoeffizienten vorgesehen ist,
- der Zwischenbereich (28) des Moduls mit integrierter Optik mehrere Lichtablenkvorrichtungen (30A, 30B, 30C, 30D) umfasst, die von einer Folge Licht brechender Flächen (D1 bis D7) gebildet werden, die entlang der Ausbreitungsrichtung des Lichtflusses zwischen der ersten Linse (14) und der zweiten Linse (18) in Abständen angeordnet sind, um die Ablenkung von Störstrahlen aus dem optischen Modul zu bewirken, die innerhalb des optischen Moduls reflektiert werden, und so die Übertragung dieser Störstrahlen entweder durch die zweite Linse (18) des Objektivs (16) zu verhindern, wenn es sich um eine Lichtübertragung handelt, die von dem Kondensorelement (12) kommt, oder durch die erste Linse (14), wenn es sich um einen von der zweiten Linse (18) kommenden Lichtempfang handelt.

2. Optische Vorrichtung zur Lichtübertragung nach Anspruch 1, **dadurch gekennzeichnet, dass** mit dem ersten Ende (22) des Moduls mit integrierter Optik (26) eine Blende (34) verbunden ist, die eine Öffnung (36) aufweist, deren Maße genau auf die Winkelöffnung des von dem Objektiv (16) ausgestrahlten oder empfangenen optischen Nutzstrahls (20) abgestimmt sind.

3. Optische Vorrichtung zur Lichtübertragung nach Anspruch 1, **dadurch gekennzeichnet, dass** die Größe der ersten Linse (14) abhängig von der Winkelöffnung des von dem Objektiv (16) ausgestrahlten oder empfangenen optischen Strahls (20) gewählt ist.

4. Optische Vorrichtung zur Lichtübertragung nach Anspruch 2, **dadurch gekennzeichnet, dass** die zweite Linse (18) des Objektivs (16) eine vorbestimmte Brennweite aufweist, deren Brennpunkt (F1) mit der Ebene der Blende (34) zusammenfällt.

5. Optische Vorrichtung zur Lichtübertragung nach Anspruch 3, **dadurch gekennzeichnet, dass** die zweite Linse (18), die das Objektiv (16) bildet, einen Brennpunkt hat, der mit der Ebene der Öffnung der ersten Linse (14) zusammenfällt.

6. Optische Vorrichtung zur Lichtübertragung nach Anspruch 1, **dadurch gekennzeichnet, dass** Form und Positionierung der Licht brechenden Flächen (D1 bis D7) der Lichtablenkvorrichtungen (30A, 30B, 30C, 30D) so gewählt sind, dass sie ein seitliches Abstrahlen der in dem Modul mit integrierter Optik (26) reflektierten Störstrahlen durch Brechung gewährleisten.

7. Optische Vorrichtung zur Lichtübertragung nach Anspruch 1, **dadurch gekennzeichnet, dass** das Material des Moduls mit integrierter Optik (26) Durchlässigkeitseigenschaften in einem Durchlassbereich von 360 bis 1560 nm hat.

8. Optische Vorrichtung zur Lichtübertragung nach Anspruch 6, **dadurch gekennzeichnet, dass** die Licht brechenden Flächen (D1 bis D7) abwechselnd konvergent und divergent und mittels koaxialer Hälse (C1, C2, C3) aneinander befestigt sind, die in Richtung auf das Objektiv (16) zunehmende Durchmesser haben, sodass sie mit der Blende (34) innerhalb des Moduls (26) einen primären optischen Konus bilden.

9. Optische Einheit mit mehreren Wegen, die auf jedem Weg ein Modul mit integrierter Optik (26) nach einem der Ansprüche 1 bis 8 einsetzt.

10. Optische Einheit mit mehreren Wegen nach Anspruch 9, **dadurch gekennzeichnet, dass** auf jedem Weg ein optoelektronisches Element (32) vor der ersten Linse (14) des entsprechenden Kondensorelements (12) angeordnet ist und entweder von einem emittierenden Element, insbesondere einer LED-Diode oder einer Laserdiode, oder einem empfangenden Element, insbesondere einer Fotodiode, gebildet wird.

11. Optische Einheit mit mehreren Wegen nach Anspruch 9 oder 10, **dadurch gekennzeichnet, dass** die einzelnen optischen Module (26) in gleichmäßigen Abständen parallel in eine Trägerplatte (40) integriert sind, die mit Befestigungsteilen (42) versehen ist, die zum Eingreifen in eine Elektroschaltung (58) herausstehen, die innerhalb eines länglichen Hohlprofils (56) angeordnet ist.

12. Optische Einheit mit mehreren Wegen nach Anspruch 9 oder 10, **dadurch gekennzeichnet, dass**:
- die einzelnen Module (26) einer optischen Einheit (38) entgegengesetzt zur Platte (40) miteinander durch starre Verbindungsbrücken (48) verbunden sind, die elastische Zungen (52) umfassen, die als Druckelemente beim mechanischen Halten innerhalb des Profils (56) dienen sollen,
- die zweite Linse (18) jedes Objektivs (16) der optischen Module in einer Öffnung (62) des Profils vorgesehen ist, um den Lichtstrahl (20) aussenden oder empfangen zu können.

13. Optische Einheit mit mehreren Wegen nach Anspruch 12, **dadurch gekennzeichnet, dass** die Verbindungsbrücken (48) Vorderseiten haben, die prismenartig (50) eingeschnitten sind, um die Störstrahlen aus dem primären Lichtkonus abzulenken.

## Claims

1. A light-transmitting optical device comprising a condenser element (12) comprising a first lens (14) to concentrate the light in the opening of an objective (16) having a second lens (18) designed to emit or receive an optical beam (20),
**characterized in that**:
- the first lens (14) of the condenser element (12) and the second lens (18) of the objective (16) are respectively arranged at one first end (22) and at a second opposite end (24) of an integrated optical module (26) that is achieved by a straight single-piece entity made of a transparent material having a pre-determined refractive index,
- the intermediate zone (28) of said integrated optical module comprises a plurality of deflectors (30A, 30b, 30C, 30D) formed by a succession of dioptric surfaces (D1 to D7) arranged at intervals along the direction of propagation of the light flux between the first lens (14) and the second lens (18) so as to perform deflection outside the optical module of the stray rays reflected inside the optical module, thereby preventing transmission of said stray rays either through the second lens (18) of the objective (16) if a light transmission coming from the condenser element (12) is involved, or through the first lens (14) if receiving light coming from the second lens (18).

2. The light-transmitting optical device according to claim 1, **characterized in that** a diaphragm (34) is associated to the first end (22) of the integrated optical module (26) and comprises a calibrated orifice (36) according to the angular opening of the useful optical beam (20) emitted or received by the objective (16).

3. The light-transmitting optical device according to claim 1, **characterized in that** the size of the first lens (14) is chosen according to the angular opening of the optical beam emitted or received by the objective (16).

4. The light-transmitting optical device according to claim 2, **characterized in that** the second lens (18) of the objective (16) presents a preset focal distance whose focus (F1 ) is advantageously identical to the plane of the diaphragm (34).

5. The light-transmitting optical device according to claim 3, **characterized in that** the second lens (18) constituting the objective (16) has a focus that is identical to the opening plane of the first lens (14).

6. The light-transmitting optical device according to claim 1, **characterized in that** the shape and positioning of the dioptric surfaces (D1 to D7) of the deflectors (30A, 30B, 30C, 30D) are chosen to ensure lateral ejection by refraction of the stray rays reflected in the integrated optical module (26).

7. The light-transmitting optical device according to claim 1, **characterized in that** the material of the integrated optical module (26) has a quality of transparency in the 360 nm to 1560 nm pass-band.

8. The light-transmitting optical device according to claim 6, **characterized in that** the dioptric surfaces (D1 to D7) are alternately convergent and divergent being joined to one another by coaxial necks (C1, C2, C3) presenting increasing diameters in the direction of the objective (16) so as to define with the diaphragm (34) a primary optical cone inside the module (26).

9. A multichannel optical system using an integrated optical module (26) according to one of the claims 1 to 8 in each channel.

10. The multichannel optical system according to claim 9, **characterized in that** an opto-electronic means (32) is placed in each channel in front of the first lens (14) of the corresponding condenser element (12) and is formed either by an emitting means, in particular a light-emitting diode LED or a laser diode, or by a receiving means, in particular a photodiode.

11. The multichannel optical system according to claim 9 or 10, **characterized in that** the different optical modules (26) are integrated in parallel manner at regular intervals in a support plate (40) equipped with salient fixing parts (42) for clipping onto an electronic circuit (58) housed inside a hollow elongate sectional part (56).

12. The multichannel optical system according to claim 9 or 10, **characterized in that**:
- the different modules (26) of an optical system (38) are joined to one another, opposite from the plate (40), by rigid connecting bridges (48) comprising flexible tabs to act as pressure means when mechanical securing is performed inside the sectional part (56),
- the second lens (18) of each objective (16) of the optical modules (26) is housed in an opening (62) of the sectional part so as to be able to emit or receive the light beam (20).

13. The multichannel optical system according to claim 12, **characterized in that** the connecting bridges (48) have front faces cut into prisms (50) to deflect stray beams outside the primary light cone.
